(19) **European Patent Office**

Europäisches Patentamt
European Patent Office
Office européen des brevets

(11) **EP 4 127 412 B1**

(12) **FASCICULE DE BREVET EUROPEEN**

(45) Date de publication et mention
de la délivrance du brevet:
**29.01.2025 Bulletin 2025/05**

(21) Numéro de dépôt: **21717150.3**

(22) Date de dépôt: **23.03.2021**

(51) Classification Internationale des Brevets (IPC):
*F01D 11/00* (2006.01)     *H02K 1/00* (2006.01)
*F01D 15/10* (2006.01)     *F01D 25/12* (2006.01)
*H02K 9/02* (2006.01)      *H02K 9/08* (2006.01)
*F01D 11/12* (2006.01)

(52) Classification Coopérative des Brevets (CPC):
**F01D 15/10; F01D 11/001; F01D 25/12;**
F01D 11/122; F05D 2220/36; F05D 2250/11;
F05D 2250/184; F05D 2250/23; F05D 2250/24;
F05D 2250/241; F05D 2250/29; F05D 2250/291;
F05D 2250/294; F05D 2260/22141; H02K 7/1823;
(Cont.)

(86) Numéro de dépôt international:
**PCT/FR2021/050489**

(87) Numéro de publication internationale:
**WO 2021/191553 (30.09.2021 Gazette 2021/39)**

(54) **TURBOMACHINE D'AERONEF EQUIPEE D'UNE MACHINE ELECTRIQUE**

TURBOMASCHINE EINES LUFTFAHRZEUGS, AUSGESTATTET MIT EINER ELEKTROMASCHINE

AIRCRAFT TURBINE ENGINE EQUIPPED WITH AN ELECTRIC MACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.03.2020 FR 2002896**

(43) Date de publication de la demande:
**08.02.2023 Bulletin 2023/06**

(73) Titulaire: **SAFRAN AIRCRAFT ENGINES**
**75015 Paris (FR)**

(72) Inventeurs:
• **CHASSAGNE, Amélie Argie Antoinette**
**77550 MOISSY-CRAMAYEL (FR)**

• **DEJEU, Clément Marcel Maurice**
**77550 MOISSY-CRAMAYEL (FR)**
• **GUILLOTEL, Loïc Paul Yves**
**77550 MOISSY-CRAMAYEL (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**EP-A2- 2 270 315     WO-A1-2006/060014
WO-A1-2015/077755     FR-A1- 2 922 265
US-A- 3 264 482     US-B2- 9 109 452**

(52) Classification Coopérative des Brevets (CPC):
     (Cont.)Y02T 50/60

(52) Classification Coopérative des Brevets (CPC):
     (Cont.)Y02T 50/60

**Description**

**Domaine technique de l'invention**

La présente invention concerne une turbomachine d'aéronef équipée d'une machine électrique.

**Arrière-plan technique**

L'état de l'art comprend notamment le document FR-A1-2 842 565 qui décrit une turbomachine équipée d'une machine électrique. L'état de l'art comprend en outre EP-A2-2 270 315, US-B2-9,109,452, US-A-3,264,482, FR-A1-2 922 265, WO-A1-2006/0600144 et WO-A1-2015/077755.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend un corps basse pression et un corps haute pression, chaque corps comportant un arbre reliant un rotor d'un compresseur à un rotor d'une turbine.

Il est connu d'équiper une turbomachine d'aéronef avec une ou plusieurs machines électriques sur les parties haute pression et/ou basse pression de la turbomachine, allant de quelques kW à plusieurs MW. On rappelle qu'une machine électrique est un dispositif électromécanique basé sur l'électromagnétisme permettant la conversion d'énergie électrique par exemple en travail ou énergie mécanique. Ce processus est réversible et peut servir à produire de l'électricité.

Ainsi, suivant l'usage final d'une machine, on utilise les termes de :

• générateur pour désigner une machine électrique produisant de l'énergie électrique à partir d'une énergie mécanique,
• moteur pour une machine électrique produisant une énergie mécanique à partir d'une énergie électrique.

Une machine électrique peut également se comporter en mode moteur comme en mode générateur.

Le procédé de refroidissement de la machine électrique est complexe et très important pour assurer le bon fonctionnement de cette dernière. Il doit notamment être compatible avec les pertes thermiques de la machine électrique devant être dissipées.

Les solutions actuelles prévoient en particulier un refroidissement du stator électrique de la machine électrique par le débit d'air de la turbomachine associé à un refroidissement additionnel complexe réalisé avec de l'huile afin de garantir un refroidissement suffisant de la machine électrique.

La présente invention propose une solution à au moins une partie des problèmes évoqués dans ce qui précède et propose en particulier une solution pour améliorer le refroidissement d'une machine électrique n'utilisant pas de refroidissement additionnel réalisé avec de l'huile.

**Résumé de l'invention**

L'invention concerne une turbomachine d'aéronef, comportant un générateur de gaz et une soufflante disposée en amont du générateur de gaz et configurée pour générer un flux d'entrée de gaz dont une partie s'écoule dans une veine du générateur de gaz pour former un flux primaire, et dont une autre partie s'écoule dans une veine autour du générateur de gaz pour former un flux secondaire, la turbomachine comportant en outre une machine électrique qui est montée coaxialement en aval de la soufflante et qui comprend un rotor entouré par un stator porté par une virole annulaire, cette virole étant entourée par un carter du générateur de gaz qui délimite avec cette virole un tronçon de ladite veine d'écoulement du flux primaire, des aubes fixes de redressement de ce flux primaire s'étendant dans cette veine.

Selon l'invention, ladite virole et/ou lesdites aubes comportent des éléments configurés pour générer des perturbations dans le flux primaire.

Les éléments générant des perturbations dans le flux primaire augmentent le coefficient d'échange entre ce dernier et la virole et/ou les aubes et donc la capacité d'échange thermique entre le flux primaire et la machine électrique sans provoquer autant de perte de charges qu'un modelage intégral de la virole et/ou des aubes. Le refroidissement de la virole et/ou des aubes et donc de la machine électrique est ainsi amélioré à débit de flux primaire équivalent. De plus, les perturbations ou turbulences permettent de mettre en mouvement l'air proche de la surface à refroidir de la virole et/ou des aubes. L'air réchauffé ne stagne pas, et se dirige par turbulence vers le flux secondaire plus froid, avant de revenir contre la surface à refroidir de la virole et/ou des aubes. Le vortex créé renouvelle ainsi l'air froid en contact avec la surface chaude et à refroidir de la virole et/ou des aubes de la machine électrique.

Le refroidissement de la machine électrique est ainsi amélioré et peut être fait exclusivement avec de l'air provenant du flux primaire. L'invention permet ainsi d'éviter l'ajout d'une boucle de refroidissement à l'huile ce qui permet notamment d'alléger fortement l'ensemble.

Le module selon l'invention peut comprendre une ou plusieurs des caractéristiques suivantes, prises isolément les unes des autres ou en combinaison les unes avec les autres :

- les éléments sont formés en creux ou en saillie sur une ou des surfaces de la virole et/ou des aubes, la surface ou chacune de ces surfaces étant destinée à être balayée par le flux primaire ;
- la surface ou chacune des surfaces comprend une matrice d'éléments identiques en creux répartis en rangées et en colonnes, soit de façon linéaire, soit en quinconce ;
- chacun des éléments a en section transversale une forme incurvée concave.
- chacun des éléments a une largeur ou dimension D comprise entre 2mm et 30mm, et une profondeur P inférieure ou égale à D ;
- la surface ou chacune des surfaces comprend une série d'éléments en forme de rainures allongées s'étendant sensiblement dans une direction d'écoulement du flux primaire ;
- les rainures sont ondulées ;
- la surface ou chacune des surfaces comprend une série d'éléments en saillie formés par des ailettes ;
- les ailettes ont une forme triangulaire ou delta ;
- les ailettes sont mobiles ou rétractables de façon à réguler les perturbations dans le flux primaire ;
- les éléments comprennent des actionneurs de génération de plasma sur la ou chacune des surface(s) destinée(s) à être balayée(s) par le flux primaire ;
- les actionneurs sont alimentés par ladite machine électrique ;
- les actionneurs sont régulièrement répartis autour de la machine électrique ;
- la virole comprend une surface annulaire interne qui entoure le stator de la machine électrique et une surface annulaire externe qui s'étend autour de la surface annulaire interne et qui définit ledit tronçon de la veine d'écoulement du flux primaire ;
- lesdits éléments sont reliés par une ou plusieurs pièce(s) thermoconductrice(s) audit stator de façon à assurer un échange calorifique par conduction ; c'est en effet le contact ou quasi-contact entre les éléments de perturbation, une ou deux pièces intermédiaires conductrices de chaleur, et le stator de la machine électrique qui permet un bon refroidissement.

**Brève description des figures**

D'autres caractéristiques et avantages de l'invention apparaitront au cours de la lecture de la description détaillée qui va suivre pour la compréhension de laquelle on se reportera aux dessins annexés dans lesquels :

[Fig.1] La figure 1 est une vue schématique en coupe axiale d'une turbomachine d'aéronef à fort taux de dilution et réducteur ;

[Fig.2] La figure 2 est une demi vue schématique partielle en coupe axiale d'une turbomachine d'aéronef équipée d'une machine électrique ;

[Fig.3a] La figure 3a est une vue schématique de dessus d'éléments configurés pour perturber un flux d'air traversant la turbomachine ;

[Fig.3b] La figure 3b est une vue schématique de profile des éléments de la figure 3a ;

[Fig.4] La figure 4 est une vue schématique de profile d'une variante de réalisation des éléments de la figure 3b ;

[Fig.5] La figure 5 est une vue schématique de profile d'une variante de réalisation des éléments de la figure 3b ; et

[Fig.6] La figure 6 est une vue schématique d'un actionneur à plasma.

[Fig.7] La figure 7 est une demi vue similaire à celle de la figure 2 et montrant une variante de réalisation d'une turbomachine d'aéronef équipée d'une machine électrique ;

[Fig.8] La figure 8 est une demi vue similaire à celle de la figure 2 et montrant une variante de réalisation d'une turbomachine d'aéronef équipée d'une machine électrique;

[Fig.9] La figure 9 est une demi vue similaire à celle de la figure 2 et montrant une variante de réalisation d'une turbomachine d'aéronef équipée d'une machine électrique.

**Description détaillée de l'invention**

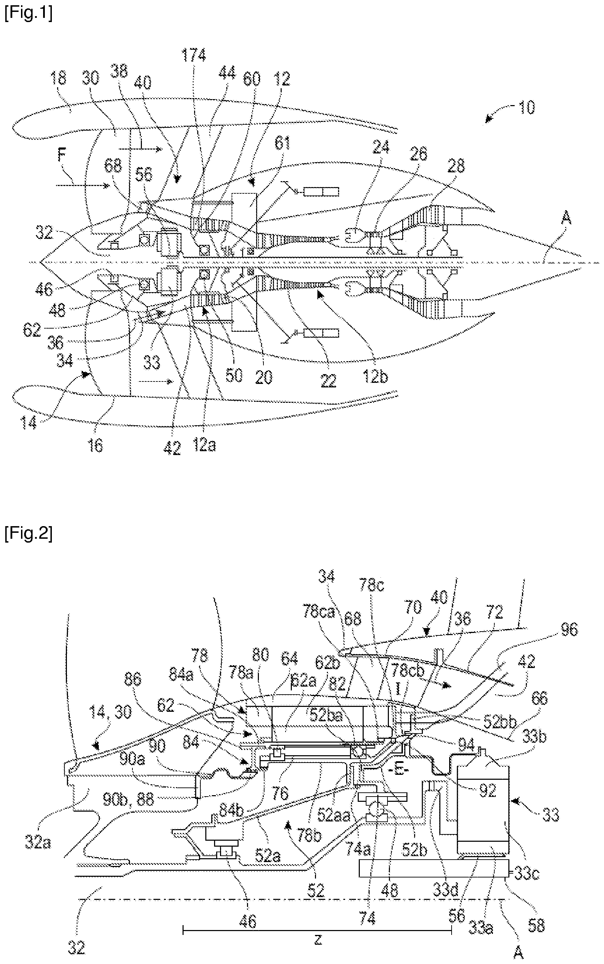

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter de soufflante 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

Les compresseurs basse pression 20 et haute pression 22 sont séparés l'un de l'autre par un carter intermédiaire 61.

La soufflante 14 comprend une rangée annu-

laire d'aubes 30 entraînée en rotation par un arbre de soufflante 32 qui est relié au rotor du corps basse pression 12a par l'intermédiaire d'un réducteur 33. La soufflante 14 est configurée pour générer un flux d'entrée de gaz F dont une partie s'écoule dans une veine du générateur de gaz, dite veine interne, pour former un flux annulaire radialement interne, appelé flux primaire 36, qui alimente le générateur de gaz 12, et dont une autre partie s'écoule dans une veine autour du générateur de gaz, dite veine externe, pour former un flux annulaire radialement externe, appelé flux secondaire 38 qui s'écoule entre le générateur de gaz 12 et la nacelle 18 et fournit la majeure partie de la poussée de la turbomachine. Le flux d'entrée de gaz F qui traverse la soufflante est ainsi séparé à l'amont du générateur de gaz 12 en un flux primaire 36 et secondaire 38 par un bec annulaire 34.

**[0025]** Un carter de générateur de gaz, dit carter d'entrée 40 relie structurellement le générateur de gaz 12 au carter de soufflante 16 et à la nacelle 18. Le carter d'entrée 40 comprend une rangée annulaire de bras 42 radialement internes s'étendant dans le flux primaire 36 c'est-à-dire dans la veine interne, une rangée annulaire d'aubes redresseurs 44 (du type OGV) radialement externes s'étendant dans le flux secondaire 38 et des redresseurs aubagés 174 s'étendant dans le flux primaire 36 en aval de la rangée annulaire de bras 42. La turbomachine comprend également une rangée annulaire d'aubes fixes 68 de redressement du flux primaire 36 s'étendant dans la veine interne et disposée en amont des bras 42.

**[0026]** Les bras 42 sont en général en nombre limités (moins de dix) et sont tubulaires et traversés par des servitudes. Le nombre d'aubes 44 (OGV) est en général supérieur à dix.

**[0027]** L'arbre de soufflante 32 est guidé en rotation à l'amont par des paliers 46, 48. Ces paliers 46, 48, sont du type à billes ou à rouleaux et comprennent chacun une bague interne montée sur l'arbre à guider, une bague externe portée par un support annulaire de paliers et des éléments roulants entre les bagues.

**[0028]** De façon connue, le réducteur 33 est du type à train épicycloïdal et comprend un solaire 33a centré sur l'axe A, une couronne 33b s'étendant autour de l'axe et des satellites 33c qui engrènent avec le solaire et la couronne et sont portés par un porte-satellites 33d (les références 33a-33d étant visibles à la figure 2). Dans l'exemple représenté, la couronne 33b est fixe et reliée fixement à un support 52 des paliers 46, 48. Le porte-satellites 33d est tournant et relié à l'arbre de soufflante 32 du réducteur qui comprend en outre un arbre d'entrée 56 engrené avec le solaire 33a. L'arbre d'entrée 56 est accouplé à l'arbre principal 58 du corps basse pression.

**[0029]** L'arbre d'entrée 56 est guidé par un palier 50 qui est porté par un support de palier 60 (figure 1).

**[0030]** Les supports de paliers 52, 60 s'étendent autour de l'axe A et sont des pièces fixes liées au carter d'entrée 40.

**[0031]** La figure 2 est une vue à plus grande échelle d'une partie de la figure 1, et en particulier de la zone Z située entre le disque de soufflante 32a et le réducteur 33, dans laquelle une machine électrique 62 est installée. La machine électrique 62 est montée coaxialement en aval de la soufflante 14.

**[0032]** En plus d'être délimitée axialement, à l'amont, par le disque de soufflante 32a, et à l'aval, par le réducteur 33, cette zone Z de forme annulaire est délimitée radialement à l'intérieur par l'arbre de soufflante 32 du réducteur et radialement à l'extérieur par les éléments qui délimitent intérieurement la veine d'écoulement du flux primaire 36. Ces éléments comprennent d'une part une virole annulaire 64 située à l'amont et une paroi annulaire interne 66 située à l'aval reliée aux extrémités radialement internes des bras 42.

**[0033]** La paroi 66 s'étend dans le prolongement de la virole 64 qui est une virole interne et qui est reliée par la rangée annulaire d'aubes fixes 68 de redressement du flux primaire 36 s'étendant dans la veine interne à une virole externe 70 faisant partie du carter d'entrée 40.

**[0034]** Les viroles 64, 70 définissent entre elles l'entrée d'air de la veine d'écoulement du flux primaire 36. La virole 70 s'étend entre le bec 34 précité et une paroi annulaire externe 72 située à l'aval de la virole 70 et qui fait partie du carter d'entrée 40 car elle est reliée aux extrémités radialement externes des bras 42. La virole 64 est donc entourée par le carter d'entrée 40 qui délimite avec cette virole 64 un tronçon de la veine d'écoulement du flux primaire 36.

**[0035]** La zone annulaire Z est partagée en deux portions annulaires, respectivement amont et aval, par le support de paliers 52. Dans l'exemple représenté, ce support a une forme générale tronconique évasée vers l'aval. Son extrémité amont et radialement interne porte la bague externe du palier 46 dont la bague interne est fixée sur l'arbre de soufflante 32. L'extrémité aval et radialement externe du support 52 est fixée au carter d'entrée 40.

**[0036]** La bague externe du ou de chaque palier 48 est fixée au support 52, sensiblement en son milieu, la ou chaque bague interne étant fixée à l'arbre de soufflante 32. Pour cela, le support de paliers 52 comprend deux tronçons annulaires, respectivement amont 52a, et aval 52b. Le tronçon amont 52a s'étend depuis le palier 46 jusqu'à une bride annulaire radialement externe 52aa, et le tronçon aval 52b s'étend depuis une bride annulaire radialement interne 52ba jusqu'à une bride annulaire radialement externe 52bb de fixation à l'extrémité amont du carter d'entrée 40.

**[0037]** La ou chaque bague externe du palier 48 est fixée à un anneau 74 qui comprend une bride annulaire radialement externe 74a intercalée entre les brides 52aa et 52ba. Ces brides 52aa, 74a, 52ba sont appliquées axialement les unes contre les autres et comprennent des orifices de passage de moyens de fixation du type vis-écrou.

**[0038]** La portion aval de la zone Z représente une partie d'une enceinte de lubrification des paliers 46, 48 et

50 ainsi que du réducteur 33 qui est logé dans cette enceinte, en étant disposé axialement entre les paliers 46, 48, d'une part, et le palier 50, d'autre part. Un brouillard d'huile règne dans cette enceinte.

La portion amont de la zone Z représente le lieu d'installation de la machine électrique 62, qui est donc isolée de l'enceinte E par le support de paliers 52. La machine 62 a une forme générale annulaire et comprend un rotor 62a et un stator 62b. Le rotor 62a a une forme générale cylindrique s'étendant autour de l'axe A et est porté par un élément de support 76 qui a lui-même une forme générale cylindrique. Le rotor 62a est disposé autour de cet élément 76.

Le stator 62b a également une forme générale cylindrique et est intégré à un organe annulaire 78 à section axiale de forme générale en C. Cet organe 78 comprend deux parties annulaires, respectivement interne 78b et externe 78a, qui s'étendent l'une autour de l'autre et dont les extrémités aval sont reliées entre elles par un fond annulaire 78c. L'organe 78 définit ainsi une ouverture qui est ici orientée axialement vers l'amont et dans laquelle sont logés le rotor 62a ainsi que l'élément de support 76.

Le stator 62b est intégré à la partie externe 78a de l'organe ou forme cette partie externe 78a. Cette partie externe 78a est entourée, ici directement par la virole 64.

La partie 78b de l'organe 78 s'étend radialement à l'intérieur du rotor 62a et de l'élément de support 76 et de paliers 80, 82 sont montés entre cet élément 76 et la partie 78b afin de guider en rotation le rotor 62a vis-à-vis du stator 62b. La partie 78b forme ainsi un support aux paliers 80, 82.

Les paliers 80, 82 sont ici au nombre de deux et écartés axialement l'un de l'autre. Le palier amont 80 est à rouleaux et le palier aval 82 est à billes.

Un élément annulaire de fermeture 84 est rapporté et fixé à l'extrémité amont de l'élément de support 76.

Cet élément de fermeture 84 a une orientation générale radiale et est fixée par sa périphérie externe à l'extrémité amont de l'élément 76. L'élément 84 comprend à sa périphérie externe un rebord cylindrique 84a qui est serré axialement contre une nervure annulaire interne de l'élément de support 76 par un écrou 86 rapporté axialement depuis l'amont.

La périphérie interne de l'élément 84 a un diamètre interne inférieur au diamètre interne principal de la partie 78b de l'organe et porte une série de cannelures rectilignes internes 88. La périphérie interne de l'élément 84 comprend en outre un voile annulaire 84b s'étendant axialement vers l'aval et coopérant à étanchéité avec l'extrémité amont de la partie 78b. L'étanchéité est assurée par un joint à labyrinthe dont les léchettes annulaires sont par exemple portées par le voile 84b et le revêtement abradable est porté par la partie 78b.

Un élément annulaire de liaison 90 est utilisé pour entraîner le rotor 62a. Cet élément 90 a une forme générale cylindrique et comprend à son extrémité amont une bride annulaire 90a de fixation au disque de soufflante 32, et à son extrémité aval une série de cannelures 90b d'accouplement à des cannelures 88 de l'élément de fermeture 84.

Les cannelures 88, 90b peuvent avantageusement être du type rotulante pour isoler au maximum la machine du reste du moteur.

Les paliers 80, 82 sont avantageusement lubrifiés et sont situés dans une mini enceinte annulaire de lubrification qui est rendue étanche à l'amont par le joint entre le voile 84b et la partie 78b, et à l'aval par le joint entre un voile 78ca et l'élément 76. L'huile de lubrification des paliers 80, 82 est destinée à être évacuée de cette mini enceinte par des trous axiaux 92 prévus dans le fond 78c, juste à la périphérie interne des voiles 78ca et 78cb. Ces trous 92 permettent à l'huile de pénétrer un espace annulaire s'étendant entre le fond 78c et le tronçon 52b du support de paliers 52. Des trous axiaux 94 sont en outre prévus sur ce tronçon 52b, sensiblement en regard des trous 92, pour que cette huile pénètre dans l'enceinte et soit évacuée dans le cadre de l'évacuation d'huile de cette enceinte. On comprend donc que l'huile de lubrification des paliers 80, 82 s'écoulera par centrifugation jusqu'au voile 78ca, passera à travers les trous 92, s'écoulera sur le voile 78cb, puis passera à travers les trous 94 pour rejoindre l'enceinte de lubrification du réducteur 33. L'huile peut être évacuée à travers l'un des bras 42 du carter d'entrée 40. Un autre des bras 42 peut être utilisé pour acheminer l'huile d'alimentation des paliers 80, 82, jusqu'à la mini enceinte précitée.

Le stator 62b est relié par un câble électrique 96 à un circuit de commande, ce câble 96 passant ici à travers un bras tubulaire 42 du carter d'entrée 40.

Le stator 62b est porté par la virole annulaire 64.

La machine électrique 62 est donc en contact direct avec la virole 64 et avec les aubes 42, 68 par l'intermédiaire de la virole 64. La machine électrique 62 peut ainsi être refroidie par le flux primaire 36 entrant en contact avec la virole 64 et les aubes 42, 68.

L'échange thermique de convection permettant le refroidissement de la machine électrique s'écrit alors de la façon suivante :

$$Flux = h * S * (Tm - Ta)$$

Avec :

- Flux : le flux de chaleur échangé
- h : le coefficient d'échange
- S : la surface d'échange
- Tm : la température du métal à refroidir (c'est-à-dire ici la virole 64 et/ou les aubes 42, 68)
- Ta : la température d'air de refroidissement (c'est-à-dire ici la température du flux primaire 36)

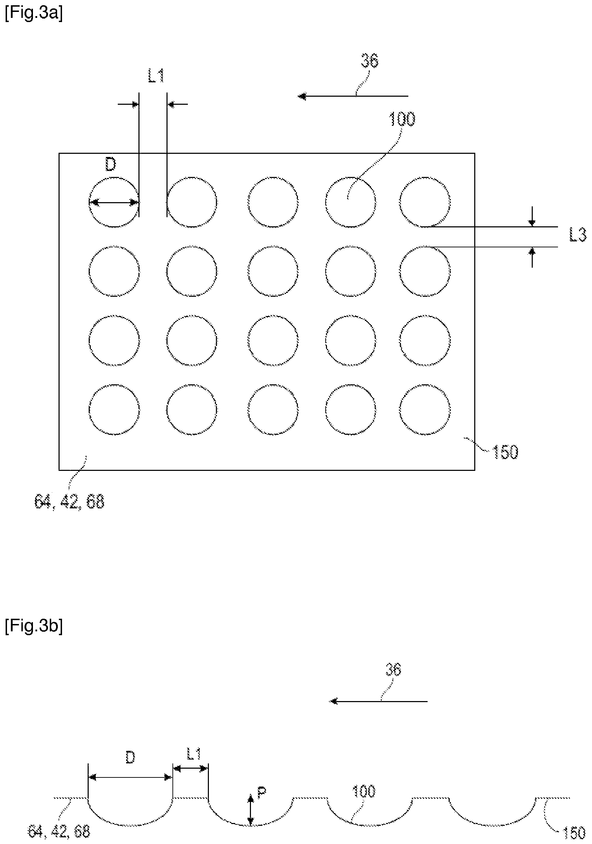

Ainsi, pour augmenter le flux de chaleur échangé, et donc améliorer le refroidissement de la machine électrique 62, il est possible de soit augmenter le coefficient d'échange h, soit la surface d'échange S, soit les deux (la température d'air Ta étant fixée par la température en sortie de la soufflante). Comme visible sur les figures 3 à 6 et selon l'invention, la virole 64 et/ou les aubes 42, 68 comportent des éléments 100 configurés pour générer des perturbations dans le flux primaire 36. Les éléments 100 sont configurés pour augmenter le coefficient d'échange h et/ou la surface d'échange S entre le flux primaire 36 et la machine électrique.

Les surfaces d'échange entre le flux primaire 36 et la machine électrique comprennent la surface de la veine interne du carter entourant le stator de la machine électrique, c'est-à-dire la surface de la virole 64 ainsi que la surface des aubes 42, 68 qui agissent comme des ailettes de refroidissement. Les éléments 100 sont ainsi situés sur une ou plusieurs surfaces d'échanges 150 situées sur la virole 64 et/ou les aubes 42, 68 destinées à être balayées par le flux primaire 36.

Les éléments 100 sont par exemple formés en creux ou en saillie sur la ou les surfaces 150 de la virole 64 et/ou des aubes 42, 68. La forme creuse ou en saillie des éléments 100 permet à la fois d'agir comme perturbateur du flux primaire 36 de manière à augmenter le coefficient d'échange et d'augmenter la surface d'échange entre le flux primaire et la machine électrique.

Comme illustrée sur les figures 3a et 3b, la surface 150 ou chacune des surfaces 150 comprend par exemple une matrice d'éléments 100 identiques en creux répartis en rangées et en colonnes. Chacun des éléments 100 a par exemple en section transversale une forme incurvée concave et représente un exemple particulier d'éléments en forme de creux. Il s'agit ici d'une structure type « balle de golf » avec une succession de creux de profondeur et de diamètre à déterminer en fonction du besoin de refroidissement.

Chacun des éléments 100 a ici une largeur ou dimension D mesurée selon la direction d'écoulement du flux primaire 36 et est comprise entre 2 et 30mm, et une profondeur P inférieure ou égale à D.

Les éléments 100 sont espacés entre eux d'une dimension L1 dans la direction d'écoulement du flux primaire 36 et d'une dimension L3 dans une direction perpendiculaire à la direction d'écoulement du flux primaire 36.

Les paramètres D, L1, L2 et P sont choisis afin d'avoir le meilleur compromis entre les critères de performance de refroidissement, de fabrication, d'impact aérodynamique dans la veine, et de coût. Par ailleurs, ces dimensions peuvent aussi être variables dans la surface 150 pour un dimensionnement optimal.

L'exemple ci-dessus considère des creux pour augmenter la surface d'échange, mais il est également envisageable de remplacer les creux par des bosses, suivant le même principe. Le paramètre de profondeur est alors remplacé par un paramètre de hauteur pour dimensionner les bosses.

Toute ou partie de la surface 150 peut bénéficier de ce modelage. On préférera en particulier la surface de la virole 64 par rapport aux surfaces des aubes 42, 68, afin de limiter l'impact sur la performance.

Cette solution comprenant une matrice d'éléments 100 identiques en creux répartis en rangées et en colonnes porte sur l'augmentation de surfaces d'échange mais agit aussi sur le coefficient d'échange. En effet, au contact de la surface non lisse, l'écoulement a tendance à devenir turbulent ce qui a pour effet d'augmenter le coefficient d'échange.

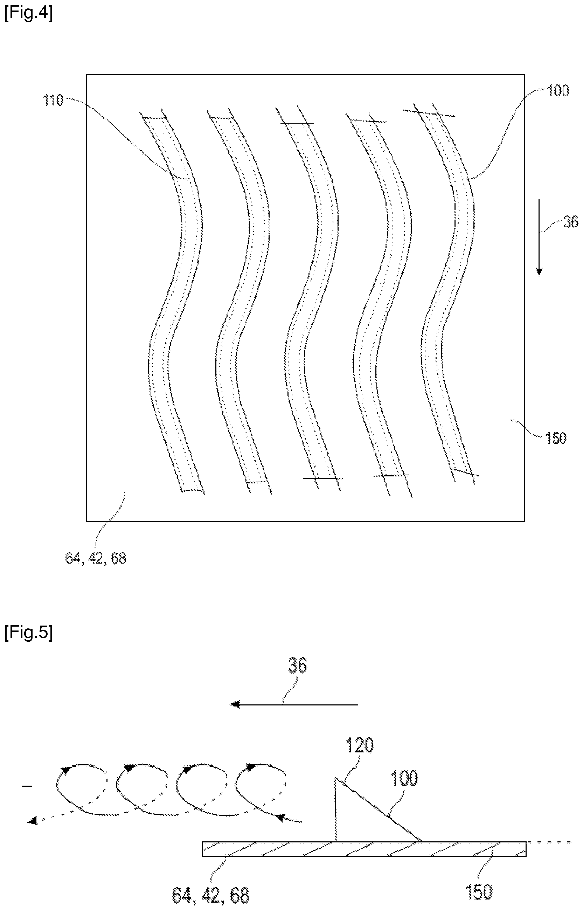

Comme visible sur la figure 4, la surface 150 ou chacune des surfaces 150 comprend par exemple, une série d'éléments 100 en forme de rainures 110 allongées s'étendant sensiblement dans une direction d'écoulement du flux primaire 36. Ils s'étendent longitudinalement en particulier dans la direction d'écoulement du flux primaire 36. On préférera faire des rainures dans le sens de l'écoulement afin de ne pas perturber de façon trop importante l'écoulement dans la veine, mais des rainures orthogonales au sens de l'écoulement peuvent également être envisagées.

De la même façon que le modelage en « balle de golf », les éléments 100 en forme de rainures 110 permettent d'augmenter la surface d'échange et le coefficient d'échange et donc d'améliorer le refroidissement de la machine électrique.

Les rainures 110 intégrées à la surface de refroidissement peuvent être rectilignes ou ondulées afin d'autoriser encore plus de surface d'échange.

De la même manière que précédemment, les éléments 100 en forme de rainure peuvent être positionnés sur tout ou partie de la surface 150 pour en augmenter la surface.

Si faire des éléments 100 en forme de rainure 110 permet de simplifier la fabrication des surfaces 150 ainsi que de limiter la masse de matière, il est également envisageable de prévoir des éléments 100 en forme de pontets sur la ou les surfaces 150, notamment par ajout de matière.

Comme illustré à la figure 5, la surface 150 ou chacune des surfaces 150 peut comprendre une série d'éléments 100 en saillie formés par des ailettes 120.

En perturbant le flux primaire 36, ces ailettes 120 augmentent le coefficient d'échange et donc la capacité d'échange sans provoquer autant de perte de charges qu'un modelage intégral de la surface 150. De plus, les turbulences permettent de mettre en mouvement l'air proche de la surface 150. L'air réchauffé ne stagne pas, il se dirige par turbulence vers le flux secondaire plus froid, avant de revenir contre la surface 150. Le vortex ainsi créé renouvelle l'air froid en contact avec la surface 150 chaude de la virole de la machine électrique.

Les ailettes 120 ont par exemple une forme triangulaire ou delta qui favorise la génération de vortex puissant.

Les ailettes 120 généreront une perte de charge comme une ailette d'échangeur mais sont ici mobiles ou rétractables de façon à réguler les perturbations dans le flux primaire 36.

La densité circonférentielle des ailettes 120 dépendra du niveau d'échange thermique et de la perte de charge souhaités. On pourra notamment placer des ailettes 120 sur plusieurs rangées pour maximiser l'échange thermique.

L'exemple de réalisation comprend ici des éléments 100 en forme d'ailette 120 mais plusieurs autres formes de perturbateurs peuvent être possibles. De préférence, les éléments 100 sont des perturbateurs de type « générateur de vortex » comme le sont les ailettes 120.

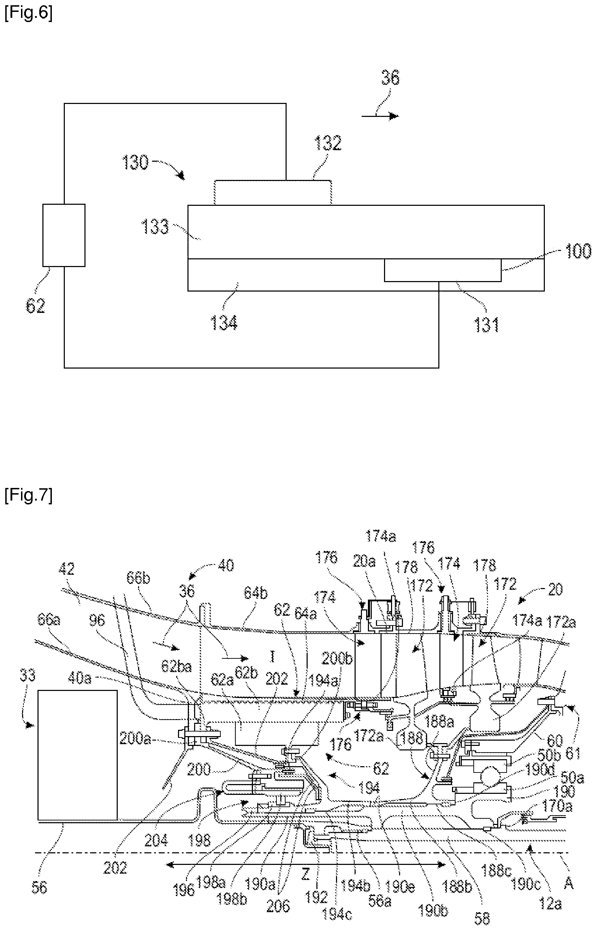

Comme visible sur la figure 6, les éléments 100 comprennent des actionneurs 130 de génération de plasma sur la ou chacune des surface(s) destinée(s) à être balayée(s) par le flux primaire 36. Les actionneurs 130 sont idéalement alimentés par la machine électrique 62, mais une autre source électrique peut également les alimenter. Ils comprennent chacun une électrode couverte 131 et une électrode exposée 132 décalée l'une par rapport à l'autre dans le sens d'écoulement du flux primaire 36. L'électrode couverte 131 est séparée de l'électrode exposée 132 par un matériau diélectrique 133 et est située dans un support 134.

Les actionneurs 130 sont régulièrement répartis autour de la machine électrique 62 par exemple sur la circonférence de la virole.

L'actionneur à plasma 130, activé via l'application d'un courant électrique, induit une perturbation de la vitesse d'écoulement local, qui sera développée en aval en turbulences. Il permet de mettre en mouvement le flux primaire 36 sans besoin d'aucune pièce mécanique et sans générer d'importante chaleur. Placés le long de la circonférence de la virole, comparés aux autres techniques de contrôle de l'écoulement précédemment présentées, ces actionneurs électriques 130 dépourvus de pièces mobiles permettent d'accélérer l'air sur la virole et les aubes 42, 68 et donc d'augmenter les échanges thermiques, sans ou presque, eux-mêmes perturber l'écoulement du flux primaire 36 lorsqu'ils ne sont pas activés. D'autre part, l'utilisation de ces actionneurs 130 permet un contrôle actif de l'efficacité de refroidissement en envoyant plus ou moins, voire pas du tout, de courant électrique, afin de perturber plus ou moins l'écoulement du flux primaire 36.

Les variantes de réalisation de l'invention illustrées aux figures 7 à 9, représentent des modes de réalisation de l'invention dans lesquels la machine électrique 62 est située en aval du réducteur.

La figure 7 illustre ainsi une variante de réalisation dans laquelle la zone Z est située en aval du réducteur 33 et en amont du carter intermédiaire 61.

Cette zone Z de forme annulaire est délimitée radialement à l'intérieur par l'arbre 58 principal du corps basse pression 12a ainsi que par l'arbre d'entrée 56 du réducteur 33, et radialement à l'extérieur par les éléments qui délimitent intérieurement la veine I d'écoulement du flux primaire 36. Ces éléments comprennent, d'amont en aval, d'une part une paroi annulaire interne 66a, une virole annulaire 64a, puis des disques 172a de roues 172 et des plateformes internes 174a des redresseurs aubagés 174 du compresseur basse pression 20.

La paroi 66a entoure le réducteur 33 et fait partie du carter d'entrée 40 car elle est reliée aux extrémités radialement internes des bras 42 dont les extrémités radialement externes sont reliées à une autre paroi annulaire externe 66b. La virole 64a s'étend autour de la machine électrique 62 et dans le prolongement de la paroi 66a.

La virole 64a est une virole interne et est entourée par une virole externe 64b, les viroles 64a, 64b définissant entre elles une portion de la veine I d'écoulement du flux primaire 36 en aval du carter d'entrée 40 et en amont du compresseur basse pression 20 et du carter intermédiaire 61. La virole 64b s'étend depuis l'extrémité aval de la paroi 66b jusqu'à une paroi 20a qui entoure les roues 172 et les redresseurs 174 du compresseur basse pression 20. La virole 64b peut être reliée ou formée d'une seule pièce avec cette paroi 20a.

Classiquement, cette paroi 20a comprend d'une part des moyens 176 de guidage en rotation et de calage variable des aubes des redresseurs 174 autours d'axes sensiblement radiaux, et des revêtements annulaires abradables 178 entourant les roues 172.

La virole 64a a son extrémité aval qui est également reliée ou fixée à des moyens 176 de guidage en rotation des aubes de redresseurs 174 autour des mêmes axes.

Les disques 172a des roues 172 du compresseur 20 sont fixés à un tourillon 188 qui est entraîné par l'arbre 58 par l'intermédiaire d'un arbre intermédiaire 190.

Le tourillon 188 a une forme annulaire et présente en section axiale une forme générale en T. Le tourillon 188 comprend une branche annulaire radiale 188a dont la périphérie interne est reliée à une branche cylindrique 188b. La périphérie externe de la branche radiale 188a est fixée par des vis à des brides des disques 172a des roues 172, et la branche cylindrique 188b comprend des cannelures internes 188c d'accouplement à des cannelures externes de l'arbre intermédiaire 190.

L'arbre intermédiaire 190 a une forme générale tubulaire et comprend un tronçon amont 190a et un tronçon aval 190b. Le tourillon 188 est monté sur le tronçon aval 190b de l'arbre intermédiaire 190, ce tronçon aval 190b comportant des cannelures internes 190c d'accouplement à des cannelures externes de l'arbre principal 58, ainsi qu'un épaulement cylindrique 190d d'appui axial vers l'aval du tourillon 188 et en particulier de l'extrémité aval de sa branche cylindrique 188b. L'arbre intermédiaire 190 peut en outre comprendre une surface cylindrique externe 190e de centrage de la branche 188b et donc du tourillon 188.

Le tronçon amont 190a de l'arbre intermédiaire 190 s'étend autour de l'extrémité aval de l'arbre d'entrée 56 du réducteur 33. Cet arbre d'entrée 56 comprend des cannelures internes 56a d'accouplement avec des cannelures externes de l'arbre principal 58. Par ailleurs, un écrou 192 est serré axialement à l'extrémité amont de l'arbre principal 58 et prend appui axialement sur l'arbre d'entrée 56 pour le serrer axialement contre l'arbre intermédiaire 190 qui prend lui-même appui axialement sur un épaulement cylindrique 170a de l'arbre principal 58.

À son extrémité aval, l'arbre intermédiaire 190 porte la bague interne 50a du palier 50, ici à billes, dont la bague externe 50b est portée par le support de palier 60. Ce support 60 a une forme générale tronconique et est évasé axialement vers l'aval. Son extrémité aval de plus grand diamètre est fixée au carter intermédiaire 61.

Ce type de palier 50 est classiquement lubrifié et est situé dans une enceinte annulaire de lubrification qui est rendue étanche pour éviter toute fuite d'huile en particulier vers l'amont, dans la zone Z d'implantation de la machine électrique 62.

Le rotor 62a est fixé ici à un organe annulaire 194 s'étendant autour de l'axe A.

L'organe 194 présente en section axiale une forme générale en T. L'organe 194 comprend une branche annulaire radiale 194a dont la périphérie interne est reliée à une branche cylindrique 194b. La périphérie externe de la branche radiale 194a est fixée par des vis au rotor 62a, et la branche cylindrique 94b comprend des cannelures internes 194c d'accouplement à des cannelures externes de l'arbre intermédiaire 190, et en particulier de son tronçon amont 190a.

L'extrémité aval de la branche cylindrique 194b est d'une part en appui axial sur l'extrémité amont de la branche cylindrique 188b du tourillon 188, et coopère d'autre part avec la surface cylindrique 190e de centrage portée par l'arbre intermédiaire 190.

Un écrou 196 est serré axialement à l'extrémité amont de l'arbre intermédiaire 190 et prend appui axialement sur l'organe 194 pour le solliciter axialement contre le tourillon 188.

À son extrémité amont, la branche cylindrique 194b de l'organe 194 porte une bague interne 198a d'un palier 198, ici à rouleaux, dont la bague externe 198b est portée par un autre support annulaire de palier 200. Ce support 200 a une forme générale tronconique et est évasé axialement vers l'amont. Son extrémité amont de plus grand diamètre est fixée au stator 62b de la machine électrique 62.

Le stator 62b comprend à son extrémité amont une bride annulaire radialement interne de fixation de plusieurs brides dont une 200a du support de palier 200. La bride 62ba du stator 62b est également fixée à une bride 40a du carter d'entrée 40, ainsi qu'à des brides de capots 202 d'étanchéité et/ou de déflecteurs.

La périphérie interne du support de palier 200 peut être équipée d'un système d'amortissement 204 à film d'huile, connu sous l'appellation anglo-saxonne *squeeze-film.* Elle peut en outre comprendre un rebord cylindrique 200b orienté vers l'aval et comportant un revêtement annulaire interne en matériau abradable.

Deux capots annulaires d'étanchéité 206 peuvent être fixés à l'organe 194 et en particulier à sa branche radiale 194a, et porter des léchettes annulaires radialement externes destinées à coopérer d'une part avec le revêtement porté par le rebord 200b, ainsi qu'avec un revêtement similaire porté par l'un des capots 202 fixés à la bride 62ba du stator 62b.

Le palier 198 est classiquement lubrifié et est situé dans une enceinte annulaire de lubrification qui est rendue étanche pour éviter toute fuite d'huile en particulier vers l'aval, dans la zone Z d'implantation de la machine électrique 62.

Le stator 62b est relié par un câble électrique 96 à un circuit de commande, ce câble 96 passant ici à travers un bras tubulaire 42 du carter d'entrée 40.

La machine électrique 62 et en particulier son stator 62b est situé au plus près du flux primaire 36 comme dans l'exemple de réalisation illustré à la figure 2, permettant ainsi de disposer d'une machine qui est refroidie par le flux primaire 36.

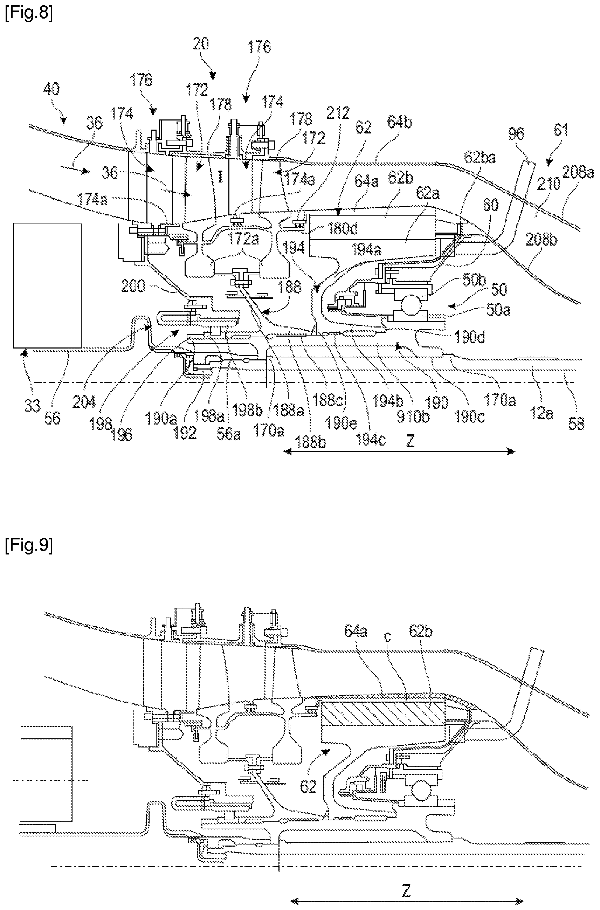

La figure 8 illustre une variante de réalisation d'une turbomachine selon l'invention.

Les éléments décrits dans ce qui précède et qui se retrouvent dans cette variante de réalisation sont désignés par les mêmes références.

La zone Z d'implantation de la machine électrique 62 est ici située en aval du réducteur 33 et du compresseur 20, et en amont du carter intermédiaire 61.

Cette zone Z de forme annulaire est délimitée radialement à l'intérieur par l'arbre 58 principal du corps basse pression 12a ainsi que par l'arbre d'entrée 56 du réducteur 33, et radialement à l'extérieur par les éléments qui délimitent intérieurement la veine I d'écoulement du flux primaire 36. Ces éléments comprennent ici, d'amont en aval, les disques 172a des roues 172 et les plateformes internes 174a des redresseurs aubagés 174 du compresseur basse pression 20, la virole annulaire 64a, puis une paroi annulaire interne 208b.

La paroi 208b fait partie du carter intermédiaire car elle est reliée aux extrémités radialement internes de bras 210 dont les extrémités radialement externes sont reliées à une autre paroi annulaire externe 208a. La virole 64a s'étend autour de la machine électrique 62 et dans le prolongement des disques 172a des roues 172 et des plateformes internes 174a des redresseurs aubagés 174 du compresseur 20.

La virole 64a est une virole interne et est entourée par une virole externe 64b, les viroles 64a, 64b définissant entre elles une portion de la veine I d'écoulement du flux primaire 36 en aval du compresseur basse pression 20 et en amont du carter intermédiaire 61. La virole 64b s'étend depuis l'extrémité aval de la paroi 20a jusqu'à une paroi annulaire externe 208a qui est reliée aux extrémités radialement externe des bras 210 et fait donc partie du carter intermédiaire 61. La virole 64b peut être reliée ou formée d'une seule pièce avec la paroi 20a.

Classiquement, cette paroi 20a comprend d'une part des moyens 176 de guidage en rotation et de calage variable des aubes des redresseurs 174 autours d'axes sensiblement radiaux, et des revêtements annulaires abradables 178 entourant les roues 172.

La virole 64a comprend à son extrémité amont un rebord cylindrique 212 orienté vers l'amont et portant un revêtement annulaire en matériau abradable destiné à coopérer avec des léchettes 180d portées par le disque 172a de la roue aval du compresseur 20.

Les disques 172a des roues 172 du compresseur 20 sont fixés à un tourillon 188 qui est entraîné par l'arbre 58 par l'intermédiaire d'un arbre intermédiaire 190.

Le stator 62b comprend à son extrémité aval une bride annulaire 62ba de fixation de plusieurs brides dont une de la paroi annulaire interne 208b. La bride 62ba du stator 62b est également fixée à une bride du support de palier 60.

La périphérie interne du support de palier 60 peut être équipée d'un système d'amortissement 204 à film d'huile, connu sous l'appellation anglo-saxonne squeeze-film.

Le palier 198 est classiquement lubrifié et est situé dans une enceinte annulaire de lubrification qui est rendue étanche pour éviter toute fuite d'huile en particulier vers l'aval, dans la zone Z d'implantation de la machine électrique 62.

Le stator 62b est relié par un câble électrique 96 à un circuit de commande, ce câble 96 passant ici à travers un bras tubulaire 110 du carter intermédiaire 61.

Comme dans le précédent mode de réalisation, la virole 64a qui s'étend, de préférence directement, autour du stator 62b, a sa surface radialement externe qui est balayée par le flux 36. La virole 64a assure l'échange de calories par conduction thermique entre le stator 62b et le flux 36.

Dans les modes de réalisations de l'invention illustrés sur les figures 7 et 8, les éléments 100 pourraient alors par exemple se situer sur la virole 64a et/ou sur les redresseurs aubagés 174.

La figure 9 illustre une autre variante de réalisation de l'invention. La zone Z d'installation de la machine électrique 62 est ici similaire à celle du mode de réalisation de la figure 8.

La machine électrique 62 est similaire à celle de la figure 8 à l'exception du fait que le capot C de son stator 62b est dissocié de la virole 64a. Les autres caractéristiques de cette variante de réalisation sont similaires à celles du mode de réalisation de la figure 8.

**Revendications**

1.  Turbomachine (10) d'aéronef, comportant un générateur de gaz (12) et une soufflante (14) disposée en amont du générateur de gaz (12) et configurée pour générer un flux d'entrée de gaz (F) dont une partie s'écoule dans une veine du générateur de gaz pour former un flux primaire (36), et dont une autre partie s'écoule dans une veine autour du générateur de gaz (12) pour former un flux secondaire (38), la turbomachine (10) comportant en outre une machine électrique (62) qui est montée coaxialement en aval de la soufflante (14) et qui comprend un rotor (62a) entouré par un stator (62b) porté par une virole annulaire (64, 64a), cette virole (64, 64a) étant entourée par un carter (40) du générateur de gaz (12) qui délimite avec cette virole (64, 64a) un tronçon de ladite veine d'écoulement du flux primaire (36), des aubes fixes (42, 68, 174) de redressement de ce flux primaire (36) s'étendant dans cette veine, la machine électrique (62) étant en contact direct avec la virole (64) et avec les aubes (42, 68, 174) par l'intermédiaire de la virole (64), **caractérisée en ce que** ladite virole (64, 64a) et/ou lesdites aubes (42, 68, 174) comportent des éléments (100) configurés pour générer des perturbations dans le flux primaire (36).

2.  Turbomachine (10) selon la revendication 1, dans laquelle les éléments (100) sont formés en creux ou en saillie sur une ou des surfaces (150) de la virole (64, 64a) et/ou des aubes (42, 68, 174), la surface (150) ou chacune de ces surfaces (150) étant destinée à être balayée par le flux primaire (36).

3.  Turbomachine (10) selon la revendication 2, dans laquelle la surface (150) ou chacune des surfaces (150) comprend une matrice d'éléments (100) identiques en creux répartis en rangées et en colonnes.

4.  Turbomachine (10) selon la revendication 3, dans laquelle chacun des éléments (100) a en section transversale une forme incurvée concave.

5.  Turbomachine (10) selon la revendication 3 ou 4, dans laquelle chacun des éléments (100) a une largeur ou dimension D comprise entre 2 et 30mm, et une profondeur P inférieure ou égale à D.

6.  Turbomachine (10) selon la revendication 2, dans laquelle la surface (150) ou chacune des surfaces (150) comprend une série d'éléments (100) en forme de rainures (110) allongées s'étendant sensiblement dans une direction d'écoulement du flux primaire (36).

7.  Turbomachine (10) selon la revendication 6, dans laquelle les rainures (110) sont ondulées.

8.  Turbomachine (10) selon la revendication 2, dans laquelle la surface (150) ou chacune des surfaces (150) comprend une série d'éléments (100) en saillie formés par des ailettes (120).

9.  Turbomachine (10) selon la revendication 8, dans laquelle les ailettes (120) ont une forme triangulaire ou delta.

10. Turbomachine (10) selon la revendication 8 ou 9, dans laquelle les ailettes (120) sont mobiles ou rétractables de façon à réguler les perturbations dans le flux primaire (36).

11. Turbomachine (10) selon l'une des revendications précédentes, dans laquelle les éléments (100) comprennent des actionneurs (130) de génération de plasma sur la ou chacune des surface(s) (150) destinée(s) à être balayée(s) par le flux primaire (36).

12. Turbomachine (10) selon la revendication 11, dans laquelle les actionneurs (130) sont alimentés par ladite machine électrique (62).

13. Turbomachine (10) selon la revendication 11 ou 12, dans laquelle les actionneurs (130) sont régulièrement répartis autour de la machine électrique (62).

14. Turbomachine (10) selon l'une des revendications précédentes, dans laquelle la virole (64, 64a) comprend une surface annulaire interne qui entoure le stator (62b) de la machine électrique (62) et une surface annulaire externe qui s'étend autour de la surface annulaire interne et qui définit ledit tronçon de la veine d'écoulement du flux primaire (36).

15. Turbomachine (10) selon l'une des revendications précédentes, dans laquelle lesdits éléments (100) sont reliés par une ou plusieurs pièce(s) thermoconductrice(s) audit stator (62b) de façon à assurer un échange calorifique par conduction.


**Patentansprüche**

1. Turbotriebwerk (10) eines Luftfahrzeugs, umfassend einen Gasgenerator (12) und ein Gebläse, das dem Gasgenerator (12) vorgelagert und konfiguriert ist, um einen Eintritts-Gasstrom (F) zu erzeugen, von dem ein Teil in einer Vene des Gasgenerators fließt, um einen primären Strom (36) zu bilden, und von dem ein anderer Teil in einer Vene um den Gasgenerator (12) herum fließt, um einen sekundären Strom (38) zu bilden, wobei das Turbotriebwerk (10) ferner eine elektrische Maschine (62) umfasst, die dem Gebläse (14) nachgelagert koaxial montiert ist und die einen Rotor (62a), der von einem Stator (62b) umgeben ist, der von einem ringförmigen Haltering (64, 64a) getragen wird, umfasst, wobei dieser Haltering (64, 64a) von einem Gehäuse (40) des Gasgenerators (12) umgeben wird, das mit diesem Haltering (64, 64a) einen Abschnitt der Durchflussvene des primären Stroms (36) abgrenzt, feste Schaufeln (42, 68, 174) zur Begradigung dieses primären Stroms (36), der sich in dieser Vene erstreckt, umfasst, wobei die elektrische Maschine (62) mit dem Haltering (64) und mittels des Halterings (64) mit den Schaufeln (42, 68, 174) in direktem Kontakt vorliegt, **dadurch gekennzeichnet, dass** der Haltering (64, 64a) und/oder die Schaufeln (42, 68, 174) Elemente (100) umfassen, die konfiguriert sind, um Perturbationen in dem primären Strom (36) zu erzeugen.

2. Turbotriebwerk (10) nach Anspruch 1, wobei die Elemente (100) vertieft oder auf einer oder den Oberflächen (150) des Halterings (64, 64a) und/oder der Schaufeln (42, 68, 174) hervorstehend gebildet sind, wobei die Oberfläche (150) oder jede dieser Oberflächen (150) dazu bestimmt ist, durch den primären Strom (36) angeströmt zu werden.

3. Turbotriebwerk (10) nach Anspruch 2, wobei die Oberfläche (150) oder jede der Oberflächen (150) eine Matrix von identischen vertieften Elementen (100) umfasst, die in Reihen und Spalten verteilt sind.

4. Turbotriebwerk (10) nach Anspruch 3, wobei jedes der Elemente (100) im Querschnitt eine konkav gekrümmte Form aufweist.

5. Turbotriebwerk (10) nach Anspruch 3 oder 4, wobei jedes der Elemente (100) eine Breite oder Abmessung D zwischen 2 und 30 mm und eine Tiefe P kleiner als oder gleich D aufweist.

6. Turbotriebwerk (10) nach Anspruch 2, wobei die Oberfläche (150) oder jede der Oberflächen (150) eine Reihe von Elementen (100) in Form von länglichen Rillen (110) umfasst, die sich im Wesentlichen in einer Durchflussrichtung des primären Stroms (36) erstrecken.

7. Turbotriebwerk (10) nach Anspruch 6, wobei die Rillen (110) wellenförmig sind.

8. Turbotriebwerk (10) nach Anspruch 2, wobei die Oberfläche (150) oder jede der Oberflächen (150) eine Reihe von hervorstehenden Elementen (100) umfasst, die durch Rippen (120) gebildet sind.

9. Turbotriebwerk (10) nach Anspruch 8, wobei die Rippen (120) eine dreieckige oder Delta-Form aufweisen.

10. Turbotriebwerk (10) nach Anspruch 8 oder 9, wobei die Rippen (120) derart beweglich oder zurückziehbar sind, um die Perturbationen in der primären Strömung (36) zu regeln.

11. Turbotriebwerk (10) nach einem der vorstehenden Ansprüche, wobei die Elemente (100) Aktuatoren (130) zum Erzeugen von Plasma auf der oder jeder der Oberfläche(n) (150) umfassen, die dazu bestimmt ist/sind, von dem primären Strom (36) angeströmt zu werden.

12. Turbotriebwerk (10) nach Anspruch 11, wobei die Aktuatoren (130) von der elektrischen Maschine (62) gespeist werden.

13. Turbotriebwerk (10) nach Anspruch 11 oder 12, wobei die Aktuatoren (130) gleichmäßig um die elektrische Maschine (62) herum verteilt sind.

14. Turbotriebwerk (10) nach einem der vorstehenden Ansprüche, wobei der Haltering (64, 64a) eine interne ringförmige Oberfläche, die den Stator (62b) der elektrischen Maschine (62) umgibt, und eine externe ringförmige Oberfläche umfasst, die sich um die interne ringförmige Oberfläche herum erstreckt und die den Abschnitt der Durchflussvene des primären Stroms (36) definiert.

15. Turbotriebwerk (10) nach einem der vorstehenden Ansprüche, wobei die Elemente (100) durch ein oder mehrere wärmeleitende(s) Stück(e) an dem Stator (62b) derart verbunden sind, um einen Wärmeaustausch durch Konduktion sicherzustellen.


**Claims**

1. An aircraft turbine engine (10), comprising a gas generator (12) and a fan (14) arranged upstream of the gas generator (12) and configured to generate a gas inlet stream (F), a portion of which flows in a duct of the gas generator to form a primary stream (36) and another portion of which flows in a duct around the gas generator (12) to form a secondary stream (38), the turbine engine (10) further comprising an electrical machine (62) which is mounted coaxially downstream of the fan (14) and which comprises a rotor (62a) surrounded by a stator (62b) carried by an annular shroud (64, 64a), this shroud (64, 64a) being surrounded by a casing (40) of the gas generator (12) which, together with this shroud (64, 64a), delimits a stretch of said flow duct for the primary stream (36), stationary vanes (42, 68, 174) for straightening this primary stream (36) extending in this duct, the electrical machine (62) being directly in contact with the shroud (64) and with the vanes (42, 68, 174) by means of the shroud (64), **characterised in that** said shroud (64, 64a) and/or said vanes (42, 68, 174) comprise elements (100) configured to generate disturbances in the primary stream (36).

2. The turbine engine (10) of claim 1, wherein the elements (100) are recessed or protruding on one or more surfaces (150) of the shroud (64, 64a) and/or the vanes (42, 68, 174), the surface (150) or each of these surfaces (150) being intended to be swept by the primary stream (36).

3. The turbine engine (10) of claim 2, wherein the surface (150) or each of the surfaces (150) comprises a matrix of identical recessed elements (100) distributed in rows and in columns.

4. The turbine engine (10) of claim 3, wherein each of the elements (100) has a concave curved shape in cross-section.

5. The turbine engine (10) of claim 3 or 4, wherein each of the elements (100) has a width or dimension D between 2 and 30mm, and a depth P less than or equal to D.

6. The turbine engine (10) of claim 2, wherein the surface (150) or each of the surfaces (150) comprises a series of elements (100) shaped like elongated groove (110) extending substantially in a flow direction of the primary stream (36).

7. The turbine engine (10) of claim 6, wherein the grooves (110) are corrugated.

8. The turbine engine (10) of claim 2, wherein the surface (150) or each of the surface (150) comprises a series of protruding elements (100) formed by fins (120).

9. The turbine engine (10) of claim 8, wherein the fins (120) are triangular or delta shaped.

10. The turbine engine (10) according to claim 8 or 9, wherein the fins (120) are movable or retractable so as to regulate the disturbances in the primary stream (36).

11. The turbine engine (10) according to any of the preceding claims, wherein the elements (100) comprise plasma generating actuators (130) on the or each of the surfaces (150) intended to be swept by the primary stream (36).

12. The turbine engine (10) of claim 11, wherein the actuators (130) are supplied by said electrical machine (62).

13. The turbine engine (10) of claim 11 or 12, wherein the actuators (130) are evenly distributed around the electrical machine (62).

14. The turbine engine (10) according to any of the preceding claims, wherein the shroud (64, 64a) comprises an internal annular surface that surrounds the stator (62b) of the electrical machine (62) and an external annular surface that extends around the internal annular surface and defines said stretch of the flow duct of the primary stream (36).

15. The turbine engine (10) according to one of the preceding claims, wherein said elements (100) are connected by one or more thermally conductive parts to said stator (62b) so as to ensure a heat exchange by conduction.

[Fig.1]

[Fig.2]

[Fig.3a]

[Fig.3b]

[Fig.4]

[Fig.5]

[Fig.6]

[Fig.7]

[Fig.8]

[Fig.9]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2842565 A1
- EP 2270315 A2
- US 9109452 B2
- US 3264482 A

- FR 2922265 A1
- WO 20060600144 A1
- WO 2015077755 A1